# EUROPEAN PATENT APPLICATION

(11) **EP 2 586 982 A2**
(43) Date of publication of application: **01.05.2013**
(21) Application number: 12190287.8
(22) Date of filing: 26.10.2012
(51) Int. Cl.: F01D 5/18

(54) **Method and apparatus for cooling gas turbine rotor blades**

(30) Priority: 31.10.2011 US 201113285946
(71) Applicant: General Electric Company, Schenectady, NY 12345 (US)
(72) Inventor: Konitzer, Douglas Gerard, Cincinnati, OH Ohio 45069 (US); Marusko, Mark Willard, Cincinnati, OH Ohio 45066 (US); Bell, Michael William, Alpha, OH Ohio 45011 (US); Yang, Xi, Alpha, OH Ohio 45011 (US); Deines, James Herbert, Cincinnati, OH Ohio 45040 (US); Przeslawski, Brian David, Alpha, OH Ohio 45044 (US); Thiel, Andrew David William, Alpha, OH Ohio 45324 (US)
(74) Representative: Williams, Andrew Richard

(57) **Abstract**

An airfoil (42) for a gas turbine engine (10) is provided that includes a first sidewall (44) and a second sidewall (46) coupled together at a leading edge (48) and a trailing edge (50), such that a cavity (56) is defined therebetween. A central plenum (58) and an impingement chamber (60) are defined within the cavity. The central plenum channels cooling fluid to the impingement chamber where cooling fluid impinges on the sidewalls. Cooling fluid is discharged from the impingement chamber via film cooling holes (80).

## Description

### BACKGROUND OF THE INVENTION

This invention relates generally to gas turbine engines and more particularly, to methods and apparatus for cooling gas turbine engine rotor assemblies.

Turbine rotor assemblies typically include at least one row of circumferentially-spaced rotor blades. Each rotor blade includes an airfoil that includes a pressure side, and a suction side connected together at leading and trailing edges. Each airfoil extends radially outward from a rotor blade platform. Each rotor blade also includes a dovetail that extends radially inward from a shank extending between the platform and the dovetail. The dovetail is used to mount the rotor blade within the rotor assembly to a rotor disk or spool. Known blades are hollow such that an internal cooling cavity is defined at least partially by the airfoil, platform, shank, and dovetail.

To facilitate preventing damage to the airfoils from exposure to high temperature combustion gases, known airfoils include an internal cooling circuit which channels cooling fluid through the airfoil. At least some known high pressure turbine blades include an internal cooling cavity that is serpentine such that a path of cooling gas is channeled radially outward to the blade tip where the flow reverses direction and flows back radially inwardly toward the blade root. The flow may exit the blade through the root or the flow may be directed to holes in the trailing edge to permit the gas to flow across a surface of the trailing edge for cooling the trailing edge. Specifically, at least some known rotor blades channel compressor bleed air into a cavity defined between the sidewalls, to convectively cool the sidewalls. Additional cooling can be accomplished using impingement cooling wherein impingement inserts channel cooling fluid through impingement jet arrays against the inner surface of the airfoil's leading edge to facilitate cooling the airfoil along the leading edge. However, these circuits, limited by manufacturing constraints, are inefficient as the circuits channel the cooling fluid through the center of the cavity where it is ineffective in removing heat from the walls of the airfoil.

### BRIEF DESCRIPTION OF THE INVENTION

In one embodiment, an airfoil for a gas turbine engine is provided. The airfoil includes a first sidewall and a second sidewall coupled together at a leading edge and a trailing edge, such that a cavity is defined therebetween. A central plenum is defined within the cavity and has a central plenum wall. An impingement chamber is defined within the cavity, the impingement chamber substantially circumscribing the central plenum. The central plenum is in flow communication with the impingement chamber.

In another embodiment, a gas turbine engine assembly comprising a compressor, a combustor, and a turbine coupled to the compressor is provided. The turbine comprises an airfoil that includes a first sidewall and a second sidewall coupled together at a leading edge and a trailing edge, such that a cavity is defined therebetween. A central plenum is defined within the cavity and has a central plenum wall. An impingement chamber is defined within the cavity, the impingement chamber substantially circumscribing the central plenum. The central plenum is in flow communication with the impingement chamber.

In yet another embodiment, a method of fabricating a rotor blade for a gas turbine engine is provided wherein the rotor blade includes an airfoil having a first sidewall and a second sidewall connected together at a leading edge and a trailing edge, such that a cavity is formed therebetween. The method includes forming a central plenum within the cavity, the central plenum having a central plenum wall and forming an impingement chamber that substantially circumscribes the central plenum, the central plenum in flow communication with the impingement chamber.

### BRIEF DESCRIPTION OF THE DRAWINGS

FIG. 1 is a schematic illustration of an exemplary gas turbine engine;
FIG. 2 is a perspective view of an exemplary rotor blade that may be used with the gas turbine illustrated in FIG. 1;
FIG. 3 is a perspective view of a portion of the rotor blade illustrated in FIG. 2 and taken along line 1; and
FIG. 4 is a cross-sectional view of the rotor blade illustrated in FIG. 2 and taken along line 1.

### DETAILED DESCRIPTION OF THE INVENTION

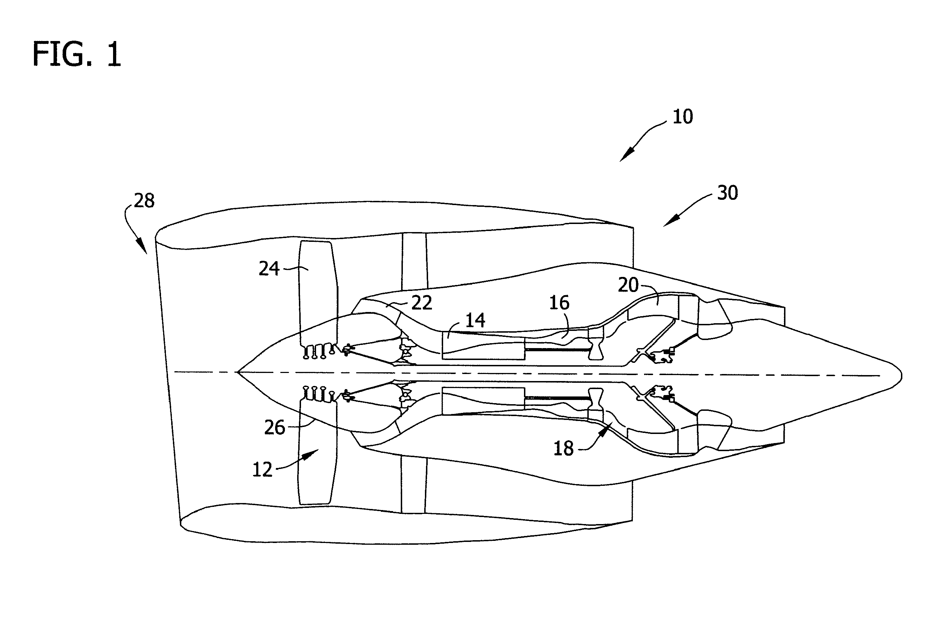

FIG. 1 is a schematic illustration of a gas turbine engine 10 including a fan assembly 12, a high pressure compressor 14, and a combustor 16. Engine 10 also includes a high pressure turbine 18, a low pressure turbine 20, and a booster 22. Fan assembly 12 includes an array of fan blades 24 extending radially outward from a rotor disc 26. Engine 10 has an intake side 28 and an exhaust side 30. In one embodiment, engine 10 is a CT7 engine commercially available from General Electric Aircraft Engines, Cincinnati, Ohio.

In operation, air flows through fan assembly 12 and compressed air is supplied to high pressure compressor 14. The highly compressed air is delivered to combustor 16. Airflow (not shown in FIG. 1) from combustor 16 drives turbines 18 and 20, and turbine 20 drives fan assembly 12.

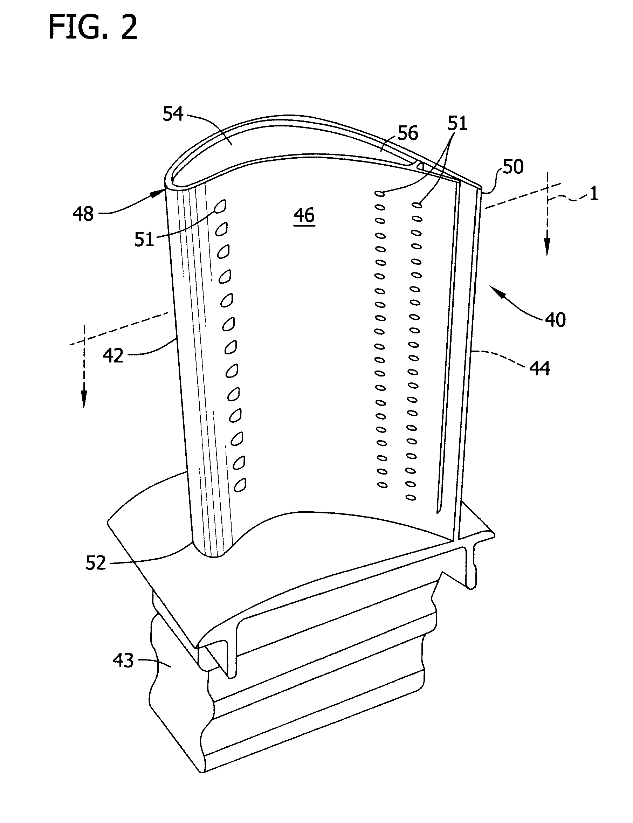

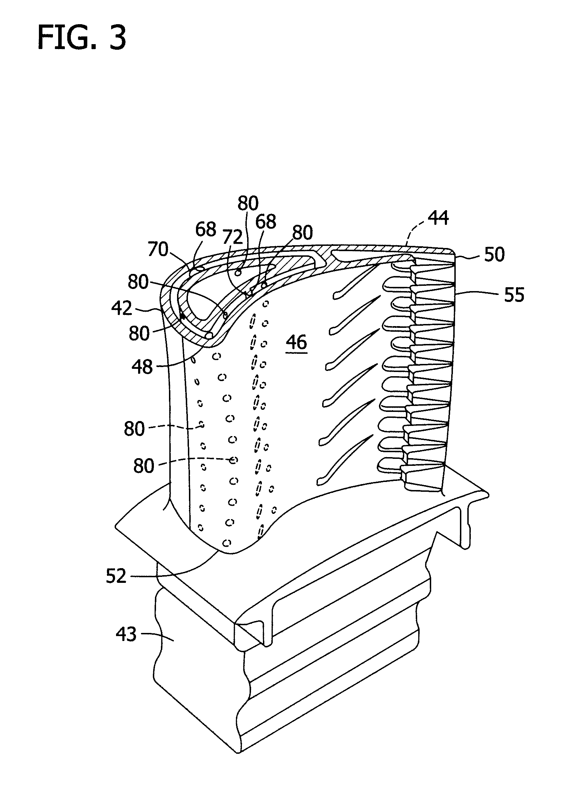

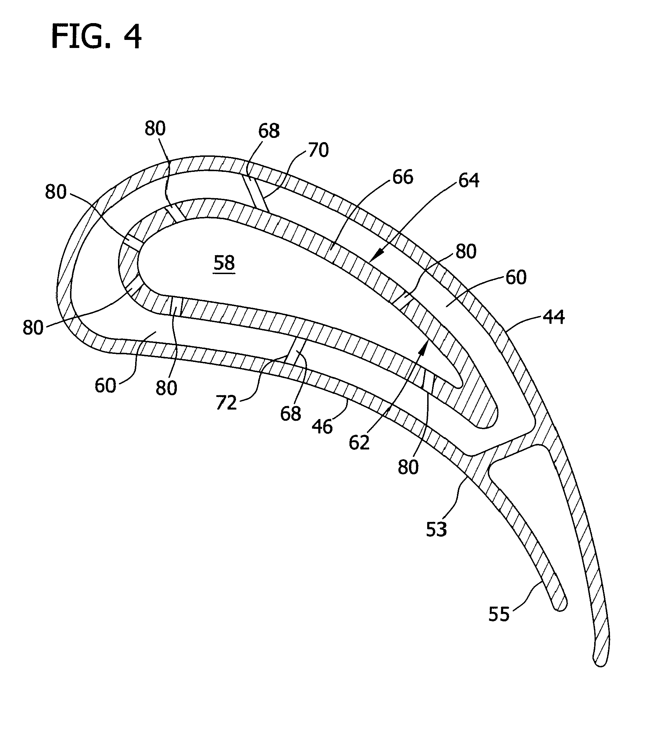

FIG. 2 is a perspective view of a rotor blade 40 that may be used with gas turbine engine 10 (shown in FIG. 1). FIG. 3 is a perspective view of a portion of rotor blade 40 and taken along line 1. FIG. 4 is a cross-sectional view of rotor blade 40 taken along line 1. In one embodiment, a plurality of rotor blades 40 form a high pressure turbine rotor blade stage (not shown) of gas turbine engine 10. Each rotor blade 40 includes a hollow airfoil 42 and an integral dovetail 43 used for mounting airfoil 42 to a rotor disk (not shown) in a known manner.

Airfoil 42 includes a first sidewall 44 and a second sidewall 46. First sidewall 44 is convex and defines a suction side of airfoil 42, and second sidewall 46 is concave and defines a pressure side of airfoil 42. Sidewalls 44 and 46 are connected together at a leading edge 48 and at an axially-spaced trailing edge 50 of airfoil 42 that is downstream from leading edge 48. Airfoil 42 includes a plurality of film holes 51 that are spaced radially along sidewalls 44 and 46 and between an airfoil tip 54 and a blade root 52 for discharging cooling fluid from airfoil 42 to facilitate cooling an outer surface 53 of airfoil 42. Film holes 51 may be of any number or position on either first or second sidewall 44 and 46 that enable airfoil 41 to function as described herein. Airfoil 42 also includes a plurality of trailing edge slots 55 spaced radially between airfoil tip 54 and blade root 52 along trailing edge 50 for discharging cooling fluid from airfoil 42 to facilitate cooling airfoil trailing edge 50. Heat transfer enhanced by film holes 51 and trailing edge slots 55 facilitates cooling along airfoil outer surface 53.

First and second sidewalls 44 and 46, respectively, extend radially from blade root 52 positioned adjacent dovetail 43 to airfoil tip 54 which defines a radially outer boundary of an internal cavity 56. Cavity 56 is defined within airfoil 42 between sidewalls 44 and 46. In the exemplary embodiment, cavity 56 is divided into a central plenum 58 and an impingement chamber 60.

Central plenum 58 has an inner surface 62 and an outer surface 64 that together define a central plenum wall 66. Central plenum 58 extends radially from blade root 52 to airfoil tip 54 and is in flow communication with a cooling fluid source (not shown) located within engine 10. Alternatively, central plenum may extend radially along a portion of airfoil 42 from blade root 52 to airfoil tip 54.

One or more struts 68 extend through impingement chamber 60 from central plenum wall 66 to first and second sidewalls 44 and 46. Struts 68 support central plenum wall 66 and enable impingement chamber 60 to substantially circumscribe central plenum 58. In the exemplary embodiment, one row of struts 70 couples central plenum wall 66 to first sidewall 44, and a second row of struts 72 couples central plenum wall 66 to second sidewall 46. Alternatively, any number of struts 68, whether arranged in rows or otherwise, may couple central plenum wall 66 to first and second sidewalls 44 and 46.

In the exemplary embodiment, first and second rows of struts 70 and 72 each include at least one strut 68. Each strut 68 in rows 70 and 72 is substantially aligned with adjacent struts 68 such that rows 70 and 72 each extend radially from blade root 52 to airfoil tip 54 in a straight or substantially straight line. Alternatively, each strut 68 may have any orientation, arrangement, spacing, size, length, and/or geometry that enable airfoil 42 to function as described herein.

At least one hole 80, or impingement jet, extends from inner surface 62 to outer surface 64. Holes 80 fluidly couple central plenum 58 to impingement chamber 60 and facilitate cooling first and second sidewalls 44 and 46. In the exemplary embodiment, six rows of holes 80 are formed in central plenum wall 66, as shown in FIGS. 3 and 4. Each row of holes 80 extends from blade root 52 to airfoil tip 54 in a straight line, substantially straight line, or arcuate arrangement. Each row has at least one hole 80. Alternatively, central plenum wall 66 may have any number of holes 80 or rows of holes 80, and each hole 80 or row of holes 80 may have any orientation, arrangement, spacing, size, length and/or geometry that enable airfoil 42 to function as described herein.

Film cooling holes 51 are formed in sidewalls 44 and 46 and are coupled to impingement chamber 60 such that cooling fluid in impingement chamber 60 may be discharged from airfoil 42. Impingement chamber 60 may also be coupled to trailing edge slots 55 via one or more channels (not shown) that facilitate the discharge of cooling fluid from impingement chamber 60 and airfoil 42.

During operation, a cooling fluid, typically air, from the cooling fluid source is channeled to central plenum 58. Cooling fluid flows through central plenum 58 from blade root 52 toward airfoil tip 54 and impinges directly into impingement chamber 60 via holes 80. More specifically, cooling fluid is impinged into first and second sidewalls 44 and 46 thereby cooling first and second sidewalls 44 and 46. Cooling fluid discharges from impingement chamber 60 and airfoil 42 via film cooling holes 51 and trailing edge slots 55.

The above-described rotor blade is cost-effective and highly reliable. The rotor blade includes an airfoil having a central plenum and an impingement chamber. A number of cooling techniques are employed to cool the exterior sidewalls of the airfoil, such as impingement cooling and near-wall cooling. The arrangement of the central plenum and the impingement chamber provide for an improved flow of cooling fluid that facilitates cooling the exterior sidewalls of the airfoil more evenly than known airfoils. Such an arrangement is made possible by advances in fabrication techniques. For example, the rotor blades described herein may be produced by investment casting, resulting in single-crystal, directionally solidified, or equiaxed blades. The embodiments described herein provide for improved cooling efficiency and stiffness and weight characteristics. As a result, cooler operating temperatures within the rotor blade facilitate extending a useful life of the rotor blades in a cost-effective and reliable manner.

While the invention has been described in terms of various specific embodiments, those skilled in the art will recognize that the invention can be practiced with modification within the scope of the claims.

Various aspects and embodiments of the invention are indicated in the following clauses::
1. An airfoil for a gas turbine engine, said airfoil comprising:
   a first sidewall and a second sidewall coupled together at a leading edge and a trailing edge, such that a cavity is defined therebetween;
   a central plenum defined within said cavity, said central plenum having a central plenum wall; and
   an impingement chamber defined within said cavity, said impingement chamber substantially circumscribing said central plenum, said central plenum in flow communication with said impingement chamber.
2. An airfoil in accordance with Clause 1, further comprising at least one strut, said at least one strut coupled to said central plenum wall and one of said first and second sidewalls.
3. An airfoil in accordance with Clause 2, wherein said at least one strut is arranged into at least one row of struts.
4. An airfoil in accordance with Clause 1, wherein said central plenum wall comprises at least one row of impingement jets, said at least one row of impingement jets extending radially.
5. An airfoil in accordance with Clause 4, wherein said at least one row of impingement jets comprises at least one hole that extends from an inner surface of said central plenum wall to an outer surface of said central plenum wall.
6. An airfoil in accordance with Clause 1, wherein said impingement chamber is coupled to at least one row of film cooling holes, said at least one row of film cooling holes extending radially.
7. An airfoil in accordance with Clause 1, further comprising a cooling fluid source that is coupled to said central plenum.
8. A gas turbine engine assembly comprising:
   a compressor;
   a combustor; and
   a turbine coupled to said compressor, said turbine comprising an airfoil, said airfoil comprising:
      a first sidewall and a second sidewall coupled together at a leading edge and a trailing edge, such that a cavity is defined therebetween;
      a central plenum defined within said cavity, said central plenum having a central plenum wall; and
      an impingement chamber defined within said cavity, said impingement chamber substantially circumscribing said central plenum, said central plenum in flow communication with said impingement chamber.
9. A gas turbine engine assembly in accordance with Clause 8, further comprising at least one strut, said at least one strut coupled to said central plenum wall and one of said first and second sidewalls.
10. A gas turbine engine assembly in accordance with Clause 9, wherein said at least one strut is arranged into at least one row of struts.
11. A gas turbine engine assembly in accordance with Clause 8, wherein said central plenum wall comprises at least one row of impingement jets, said at least one row of impingement jets extending radially.
12. A gas turbine engine assembly in accordance with Clause 11, wherein said at least one row of impingement jets comprises at least one hole that extends from an inner surface of said central plenum wall to an outer surface of said central plenum wall.
13. A gas turbine engine assembly in accordance with Clause 8, wherein said impingement chamber is coupled to at least one row of film cooling holes, said at least one row of film cooling holes extending radially.
14. A gas turbine engine assembly in accordance with Clause 8, further comprising a cooling fluid source that is coupled to said central plenum.
15. A method of fabricating a rotor blade for a gas turbine engine, wherein the rotor blade includes an airfoil having a first sidewall and a second sidewall connected together at a leading edge and a trailing edge, such that a cavity is formed therebetween, said method comprising:
   forming a central plenum within the cavity, the central plenum having a central plenum wall; and
   forming an impingement chamber that substantially circumscribes the central plenum, the central plenum in flow communication with the impingement chamber.
16. A method in accordance with Clause 15, further comprising forming at least one strut that is coupled to the central plenum wall and one of the first and second sidewalls.
17. A method in accordance with Clause 16, wherein forming at least one strut comprises arranging the at least one strut into at least one row of struts.
18. A method in accordance with Clause 15, further comprising forming at least one row of impingement jets within the central plenum wall.
19. A method in accordance with Clause 15, further comprising forming at least one row of film cooling holes within the first sidewall, the at least one row of film cooling holes coupled to the impingement chamber.
20. A method in accordance with Clause 15, further comprising forming at least one row of film cooling holes within the second sidewall, the at least one row of film cooling holes coupled to the impingement chamber.

## Claims

1. An airfoil (42) for a gas turbine engine (10), said airfoil comprising:
a first sidewall (44) and a second sidewall (46) coupled together at a leading edge (48) and a trailing edge (50), such that a cavity (56) is defined therebetween;
a central plenum (58) defined within said cavity, said central plenum having a central plenum wall (66); and
an impingement chamber (60) defined within said cavity, said impingement chamber substantially circumscribing said central plenum, said central plenum in flow communication with said impingement chamber.

2. An airfoil (42) in accordance with Claim 1, further comprising at least one strut (68), said at least one strut coupled to said central plenum wall (66) and one or both of said first (44) and second sidewalls (46).

3. An airfoil (42) in accordance with Claim 2, wherein said at least one strut (68) is arranged into at least one row (70) of struts.

4. An airfoil (42) in accordance with any preceding Claim, wherein said central plenum wall (66) comprises at least one row of impingement jets (80), said at least one row of impingement jets extending radially.

5. An airfoil (42) in accordance with Claim 4, wherein said at least one row of impingement jets (80) comprises at least one hole that extends from an inner surface (62) of said central plenum wall (66) to an outer surface (64) of said central plenum wall.

6. An airfoil (42) in accordance with any preceding Claim, wherein said impingement chamber (60) is coupled to at least one row of film cooling holes (51), said at least one row of film cooling holes extending radially.

7. An airfoil (42) in accordance with any preceding Claim, further comprising a cooling fluid source that is coupled to said central plenum (58) .

8. A gas turbine engine (10) assembly comprising:
a compressor (14);
a combustor (16); and
a turbine (18) coupled to said compressor, said turbine comprising an airfoil (42) according to any preceding Claim.

9. A gas turbine engine (10) assembly in accordance with Claim 8, further comprising at least one strut (68), said at least one strut coupled to said central plenum wall (66) and one or both of said first (44) and second sidewalls (46).

10. A gas turbine engine (10) assembly in accordance with Claim 9, wherein said at least one strut (68) is arranged into at least one row (70) of struts.

11. A method of fabricating a rotor blade for a gas turbine engine (10), wherein the rotor blade includes an airfoil (42) having a first sidewall (44) and a second sidewall (46) connected together at a leading edge (48) and a trailing edge (50), such that a cavity (56) is formed therebetween, said method comprising:
forming a central plenum (58) within the cavity, the central plenum having a central plenum wall (66); and
forming an impingement chamber (60) that substantially circumscribes the central plenum (58), the central plenum in flow communication with the impingement chamber (60).

12. A method in accordance with Claim 11, further comprising forming at least one strut (68) that is coupled to the central plenum wall (66) and one or both of the first and second sidewalls (44,46).

13. A method in accordance with Claim 12, wherein forming at least one strut (68) comprises arranging the at least one strut into at least one row (70) of struts.

14. A method in accordance with any of Claims 11 to 13, further comprising forming at least one row of impingement jets (80) within the central plenum wall (66).

15. A method in accordance with any of Claims 11 to 14, further comprising forming at least one row of film cooling holes (51) within the first sidewall (44), the at least one row of film cooling holes coupled to the impingement chamber. (60).
